(19) Europäisches Patentamt
European Patent Office
Office européen des brevets

(11) Veröffentlichungsnummer: **0 049 816**
**A2**

(12) # EUROPÄISCHE PATENTANMELDUNG

(21) Anmeldenummer: **81107754.4**

(22) Anmeldetag: **30.09.81**

(51) Int. Cl.³: **G 21 K 1/00**

(30) Priorität: **06.10.80 DE 3037745**

(43) Veröffentlichungstag der Anmeldung:
**21.04.82 Patentblatt 82/16**

(84) Benannte Vertragsstaaten:
**AT CH FR GB LI**

(71) Anmelder: **Schmidt, Wolfgang, Dr.-Ing.**
**Villenstrasse 34**
**D-6730 Neustadt(DE)**

(72) Erfinder: **Schmidt, Wolfgang, Dr.-Ing.**
**Villenstrasse 34**
**D-6730 Neustadt(DE)**

(54) **Verfahren zur Gewinnung von Energieleistung aus der Masse-Energie-Äquivalenz bei der Entstehung von Protonen und Neutronen.**

(57) Bei diesem Verfahren werden Elektronenströme gegeneinander, beziehungsweise Protonenströme gegeneinander gerichtet mit der Geschwindigkeit von über 0,5c, bezogen auf die Apparatur, sodaß entgegen dem unbewiesenen Dogma vom "Additionstheorem" relative Geschwindigkeiten von Elektronen zueinander bzw. Protonen zueinander von über c auftreten. Dabei kehrt die Abstoßungskraft zwischen gleichnamigen Ladungen ihre Richtung um und wird zur Anziehungskraft. Durch diese Änderung der Größe und der Richtung der Beschleunigungen der Teilchen werden Strahlungen erregt, deren Energie der Änderung der Massen von drei Elektronen zur Masse von einem Proton äquivalent ist. Dieser Fluß elektromagnetischer Energie wird mit bekannten Verfahren zur Energieleistung genutzt.

Abb 1

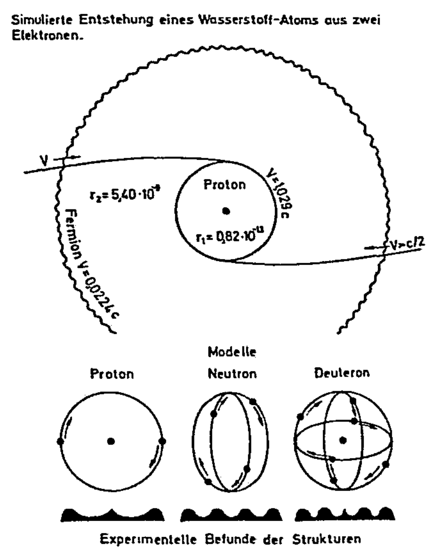


./...

EP 0 049 816 A2

Abb 2

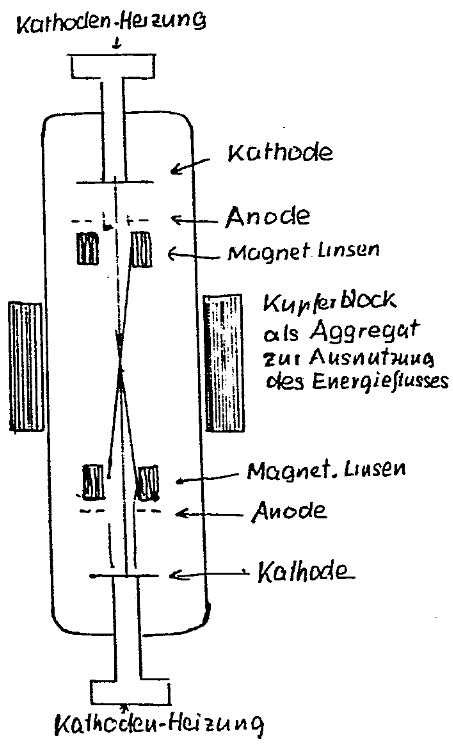

Kathoden-Heizung
Kathode
Anode
Magnet. Linsen
Kupferblock
als Aggregat
zur Ausnutzung
des Energieflusses
Magnet. Linsen
Anode
Kathode
Kathoden-Heizung

# Verfahren zur Gewinnung von Energieleistung aus der Masse-Energie-Äquivalenz bei der Entstehung von Protonen und Neutronen

Die Erfindung bezieht sich auf die Herstellung von einem Energiefluß, der bei der Entstehung der Masse von Protonen und Neutronen aus schnell bewegten Elektronen oder bei dem Masseverlust bei ihrem Zerfall entsteht, zur Gewinnung von Energieleistung mit bekannten Kälte- und Wärmekraftmaschinen, elektrischen Stromerzeugern und zur direkten Verwendung der Leistung für chemische Prozesse.

Die Erfindung bezieht sich nicht auf die bekannte Ausnutzung des Massedefekts von ca 0,8 % der umgewandelten Masse bei der Fusion und bei der Spaltung von schweren Atomkernen.

Es ist bekannt, daß durch Spaltung von schweren Atomkernen und durch Fusion von Tritonen und Protonen zu Helium eine Energieleistung gewonnen werden kann. Bei der Spaltung von schweren Atomkernen unterscheiden sich die Massen der gespaltenen Kerne von denen der Spaltprodukte um maximal 0,8 %, dem Massedefekt, und bei der Fusion unterscheidet sich die Masse des entstandenen Heliumatoms von der Masse der Ausgangsatome ebenfalls nur um den Massedefekt von 0,8%. Diesem Massedefekt ist die Energie $E = mc^2$ äquivalent, und nur diese kann mit einem Wirkungsgrad von Wärmekraftmaschinen oder als Prozeßwärme technisch genutzt werden.

Es ist bekannt, daß auch Protonen und Neutronen zusammengesetzte Systeme sind, sie sollen nach dem Stand der Wissenschaft aus 3-4 virtuellen Quarks mit "komplementären Farben" zusammengesetzt sein. Was "virtuelle farbige Quarks" sein können, ist noch durchaus strittig.

Über die technische Herstellung von Protonen- und Neutronen-Massen und über die Gewinnung von Energieleistung durch diesen Vorgang ist bisher nichts bekannt und veröffentlicht.

Bekannt sind positive und negative Energien, wie Abstoßungs- und Anziehungspotentiale. Die Technik erzeugt und verbraucht keine Energie, sondern sie verwendet nur die durch Naturgesetze gegebenen Energieflüsse, indem sie Bedingungen schafft, unter welchen Energieflüsse nach den Naturgesetzen zwangsläufig ihre Apparaturen durchlaufen und Arbeit leisten. Nach Clausius fließt Wärme von selbst stets nur vom wärmeren zum kälteren Teil eines Objekts. Dadurch nimmt die Entropie stetig zu. Weniger beachtet wird die Tatsache, daß Wärme als eine Energie eine Schwere besitzt und daher der Schwerkraft folgend auch von der kälteren Oberfläche eines Himmelskörpers nach dem wärmeren Zentrum von selbst fließt. Bei diesem Teilvorgang nimmt die Entropie ab. Dieser natürliche Vorgang der abnehmenden Entropie durch Anziehungskraft erzeugt den Temperaturgradient der Erdwärme, die man technisch nutzt. Die Gravitationsenergie der schweren Masse ist eine negative Energie.

Wenn die Masse von Atomen durch Spaltung oder durch Fusion abnimmt, entsteht eine positive Energie, und wenn sich bei einem Vorgang zwangsläufig die Masse von Protonen bildet, entsteht negative Energie oder ein Energiefluß von außen nach innen. Bei diesem Vorgang nimmt die Entropie ab.

Nach dem bekannten statischen Coulombgesetz stoßen sich zwei Elektronen ab. Dieses Coulombpotential ist eine positive Energie. Die statische Kraftgleichung lautet: (1) $d^2\bar{r}/dt^2 = +e^2\bar{r}/r^3$. Die Zeit t im Nenner auf der linken Seite ist eine Reziproke von Frequenzen. Bei der Übertragung der Kraft mit der Lichtgeschwindigkeit c zwischen relativ zueinander mit der Geschwindigkeit $\dot{r}$ bewegten Elektronen ändern sich die Frequenzen und somit auch t nach dem optischen Dopplereffekt; und damit ändert sich die Beschleunigung durch die Coulombkraft mit dem Quadrat des

optischen Dopplereffekts, und deshalb muß die rechte Seite der Gleichung (1) durch den Faktor $(c^2 - \dot{r}^2)/(c - \dot{r})^2$ erweitert werden. Dadurch entsteht für bewegte Elektronen die Gleichung

(2) $d^2\bar{r}/dt^2 = +e^2\bar{r}/r^3 \cdot (c^2 - \dot{r}^2)/(c - \dot{r})^2$

Mit der Änderung der Flächengeschwindigkeit, die in dieser Gleichung steckt, tritt eine Energiestrahlung auf. Wenn die relative Geschwindigkeit der Elektronen $\dot{r} > c$ ist, wird der Faktor negativ, d.h. aus der Abstoßung wird eine Anziehung. Nach dieser Gleichung entstehen aus Elektronen mit relativen Geschwindigkeiten größer als c weitgehend unabhängig von den Startbedingungen einheitliche stabile Umlaufgebilde mit den exakten Eigenschaften und Daten von Protonen und Neutronen. Diese zusammengesetzten Protonen haben nach Gleichung (2) auch noch die Eigenschaft, daß nur eine stabile Bahn eines Außenelektrons mit dem Bahndrehimpuls und Bahnradius eines Wasserstoff-Außenelektrons möglich ist.

Bekanntlich kann man mit nur einem Beschleuniger mit noch so großem Energieaufwand nie die Lichtgeschwindigkeit erreichen. Es ist jedoch bekannt, daß man mit weniger Energie Teilchenströme mit zwei gegeneinander gerichteten Beschleunigern hohe Relativgeschwindigkeiten erzeugen kann(UK-Patent 993,174 und US-Patent 3,859,164) Eine ausführliche Darstellung findet sich in Atomkernenergie(ATKE) Bd.32 (1978) Seite 100-119 von Bogdan Maglich.

Nach dem allgemeinen physikalischen Grundsatz werden Größen von gleicher Dimension, gemessen mit gleichen Einheiten, addiert, indem man nur die Zahlenwerte addiert und mit der Einheit multipliziert, danach ist $0{,}51c + 0{,}51c = (0{,}51 + 0{,}51)c = 1{,}02c$ .

Dieser an sich einfache Gedankengang steht im Widerspruch zu dem aus der Lorentz-Transformation gefolgerten "Additionstheorem", welchem die Lehrmeinung eine absolute Gültigkeit zuschreibt. (Experimentelle Forschungsarbeiten, die dem Additionstheorem widersprechen, dürfen auf Weisung der Deutschen Physikalischen Gesellschaft und ähnlich gelagerten Zensurinstitutionen nicht veröffentlicht werden. Infolgedessen gibt es darüber keine offizielle Literatur.)

Eine eingehende Untersuchung der Lorentz-Transformation, der nicht widersprochen werden konnte, hat ergeben, daß alle publizierten Ableitungen der Lorentz-Transformation auf ganz trivialen Rechenfehlern wie Vorzeichenverwechselungen, Dimensionsvertauschungen oder Vertauschungen von Variablen mit Konstanten in zueinander addierten Gleichungen beruhen, und daß es keine prüfbaren physikalische Fakten gibt, aus denen die Lorentz-Transformation fehlerfrei abgeleitet werden kann. Auch aus dem optischen Dopplereffekt mit ähnlicher Formel läßt sich die Lorentz-Transformation nicht ohne Fehler herleiten. Es besteht daher kein Grund relative Partikelgeschwindigkeiten aus der Betrachtung auszuschließen, wenn diese größer als die Lichtgeschwindigkeit sind. Und auf diesen Fakten beruht die vorliegende Erfindung.

Die Kenntnis dieser theoretischen Fakten, veröffentlicht in"Quellen des Nichtwissens", vier Vorträge vor der Deutschen Physikalischen Gesellschaft 1981 in Gießen, ist für den Fachmann, der zumeist ein theoretischer Physiker ist, zum Verständnis erforderlich, weil die Grundlagen des Verfahrens auf der einfachen Addition von relativen Geschwindigkeiten beruhen. Für relative Partikelgeschwindigkeiten ist c keine absolute Grenze, c ist nur eine Grenze nach beiden Richtungen, über die hinaus eine Beschleunigung durch nur eine Kraft nicht möglich ist.

Bei Geschwindigkeiten über c kehrt die Coulombkraft ihre Richtung um.

Es wurde gefunden, daß aus zwei Strömen freier Elektronen, die mit 100 keV auf Geschwindigkeiten von ca 0,52c ,bezogen auf die Apparatur, beschleunigt worden sind, und die gegeneinander gerichtet werden,

sodaß ihre relative Geschwindigkeit zueinander größer als c ist, durch die gegenseitige Anziehung stabile Gebilde mit den Eigenschaften und der Schwere von Protonen und Neutronen entstehen. Abb.1.

Es wurde gefunden, daß aus zwei gegeneinander gerichteten Strömen freier Protonen, die bezogen auf die Apparatur auf eine Geschwindigkeit von ca 0,52c beschleunigt worden sind, sodaß ihre Geschwindigkeit gegeneinander über c ist, sich anziehen, und daß dadurch diese unter intermediärer Bildung von hochenergetischen Teilchen zu Elektronen zerfallen.

Bei beiden Vorgängen, die zwangsläufig vorsichgehen wird elektromagnetische Strahlung, die der Masse-Energie-Äquivalenz entspricht, ausgelöst.

Beispiele:

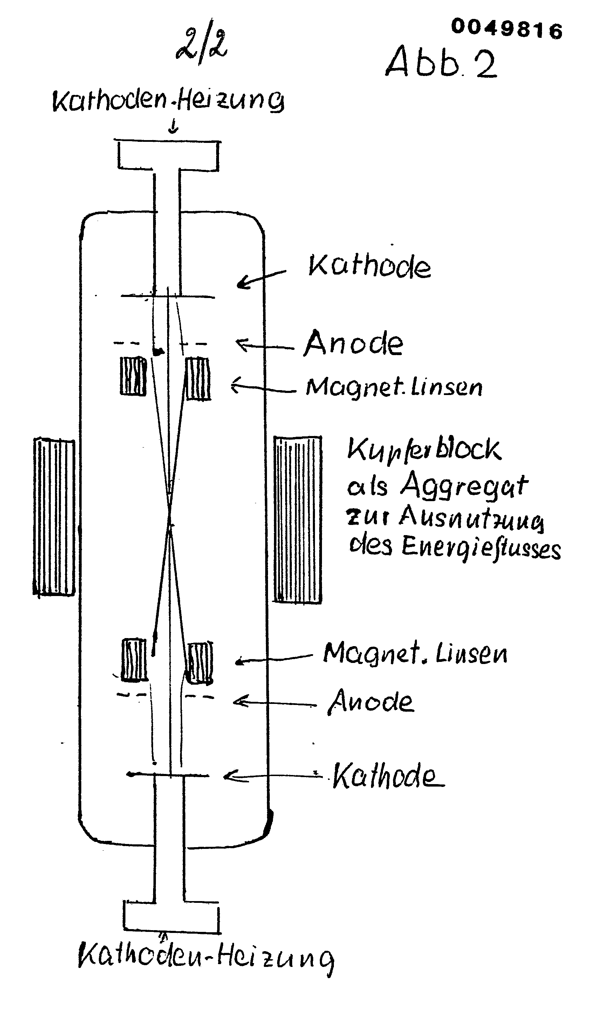

1) Mit zwei einfachen Teilchenbeschleunigern, die zwei gegeneinander gerichteten Elektronenmikroskopen entsprechen (Abb 2), werden mit ca 100 keV die Elektronen mit ca 0,52c, bezogen auf die Apparatur, mit magnetischen Linsen mit einer Genauigkeit von $100(pm)^2$ auf einander gezielt. Der elektromagnetische Energiefluß bei einem mA in Richtung senkrecht zur Achse kühlt den aussen angebrachten Mantel bis zur Supraleitung(auch für Wärme)ab. Den Energiefluß kann man in üblicher Weise technisch nutzen.

2) Mit zwei Linearbeschleunigern werden in entprechender Weise zwei Protonenströme auf Geschwindigkeiten von 0,52c bezogen auf die Apparatur gegeneinander gezielt. Dabei entstehen intermediär hochenergetische Partikel, die unter Abgabe elektromagnetischer Energiestrahlung zu Elektronen zerfallen. Diese Strahlung kann man durch chemische Prozesse in Strom umwandeln, oder über die Wärme mittels Wärmekraftmaschinen.

Der technische Fortschritt:

Der technische Fortschritt dieser Erfindung liegt darin, daß

1.) der technische Aufwand relativ klein ist,

2.) kleine Anlagen möglich sind,

3.) die ganze Masse der Protonen und Neutronen zur Energiegewinnung verwendet werden kann und nicht nur die des Massedefekts von 0,8%. Die gewinnbare Energie beträgt pro Gramm H ca 20 Millionen kWh

4.) bei der Gewinnung atomarer Energie auf diese Weise keinerlei schädliche Rückstände und kein waffenfähiges Material entstehen.

5.) keine Abwärme zu beseitigen ist.

6.) keine Rohstoffsorgen entstehen.

7.) der Wirkungsgrad für die Wirtschaftlichkeit nicht entscheidend ist, er hängt in hohem Maße von der Präzision ab.

Patentansprüche:

1.) Verfahren zur Herstellung von atomarer Energieleistung dadurch gekennzeichnet, daß man zwei Ströme von Elektronen auf die Geschwindigkeit von mehr als 0,5c mit ca 100 keV beschleunigt und diese gegeneinander leitet, und die dabei entstehende Strahlungsenergie mit bekannten Verfahren in elektrische Potentialdifferenzen oder in Wärmedifferenzen umwandelt und diese zur Energieleistung nutzt.

2.) Verfahren nach Anspruch 1.)dadurch gekennzeichnet, daß man die Ströme auf verschiedene Geschwindigkeiten beschleunigt und gegeneinander richtet, wobei die Summe der beiden Geschwindigkeiten größer als c ist.

3.) Verfahren zur Gewinnung von atomarer Energieleistung dadurch gekennzeichnet, daß man zwei Ströme von Protonen auf die Geschwindigkeit von mehr als 0,5c mit ca 200 MeV beschleunigt und gegeneinander richtet, und die dabei entstehende Strahlungsenergie direkt oder indirekt zur Energiegewinnung nutzt.

0049816

1/2

Abb. 1

Simulierte Entstehung eines Wasserstoff-Atoms aus zwei Elektronen.

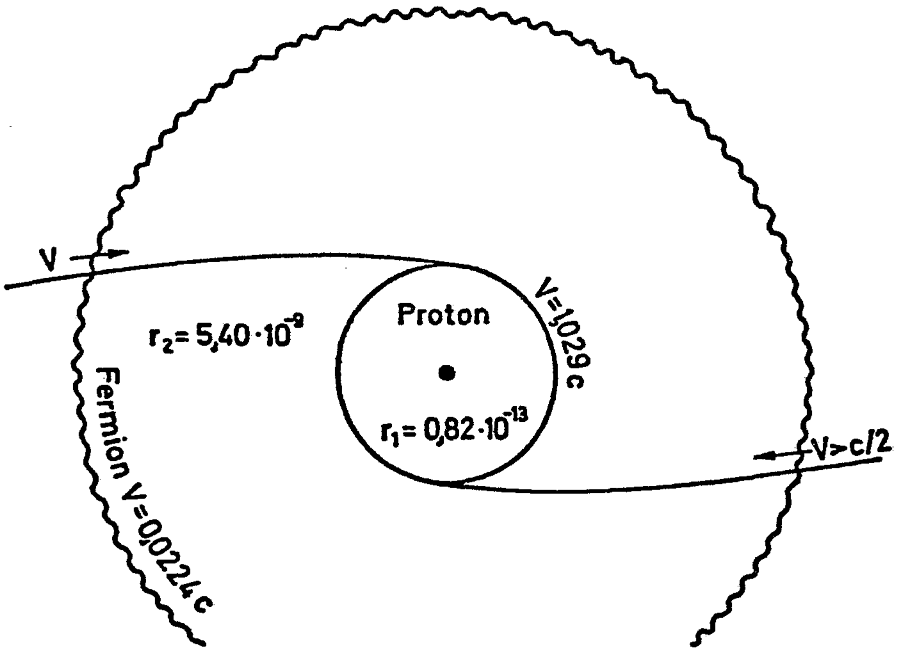


Modelle

Proton Neutron Deuteron

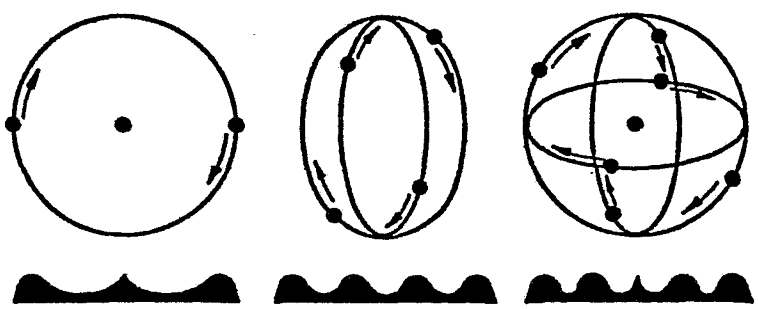

Experimentelle Befunde der Strukturen

0049816

Abb. 2